# EUROPEAN PATENT SPECIFICATION

(11) **EP 2 978 058 B1**
(45) Date of publication and mention of the grant of the patent: **31.05.2017**
(21) Application number: 15174269.9
(22) Date of filing: 29.06.2015
(51) Int. Cl.: H01M 8/2475, H01M 8/04014, H01M 8/04089, H01M 8/0662, C01B 3/38, H01M 8/124, H01M 8/0432, H01M 8/04746, H01M 8/04955, H01M 8/0612

(54) **FUEL CELL SYSTEM**
BRENNSTOFFZELLENSYSTEM
SYSTÈME DE PILE À COMBUSTIBLE

(30) Priority: 30.06.2014 JP 2014134692
(43) Date of publication of application: 27.01.2016
(73) Proprietor: Aisin Seiki Kabushiki Kaisha, Kariya-shi Aichi-ken, 448-8650 (JP)
(72) Inventor: Ohkawara, Hiroki, Aichi-ken Aichi 448-8650 (JP)
(74) Representative: D Young & Co LLP

(56) References cited:
- JP-A- 2005 235 635
- JP-A- 2011 204 446
- US-A1- 2011 020 715

## Description

### TECHNICAL FIELD

This disclosure generally relates to a fuel cell system.

### BACKGROUND DISCUSSION

A known fuel cell system for indoor installation suctioning and discharging (emitting or exhausting) air through a double pipe duct is disclosed, for example, in JP2006-253020A which is hereinafter referred to as Reference 1. The fuel cell system disclosed in Reference 1 includes a ventilation line taking in air from an outdoor environment so that the air is introduced to a power generation apparatus (i.e., a fuel cell system) for ventilation or cooling and an air line pressurizing air necessary for power generation by an air blower to supply the pressurized air to a fuel cell. The ventilation line and the air line are configured to be branched from each other.

An exhaust fan is provided at an exhaust line discharging air within the fuel cell system. The air within the fuel cell system is discharged by the exhaust fan and thereafter is mixed with exhaust gas from the fuel cell so that the mixture is discharged or emitted into the outdoor environment via the double pipe duct.

According to the fuel cell system disclosed in Reference 1, in a case where the exhaust fan is driven in a stopped state of the air blower when the fuel cell is stopped, the inside of the fuel cell system turns to a negative pressure. Thus, air containing water vapor flows backwards to the air blower from the fuel cell, which may cause a breakage of the air blower, for example. The negative pressure at the inside of the fuel cell system may also occur by an air intake and exhaust pressure difference at a chimney (exhaust exit) constituted by the double pipe duct.

In order to inhibit the air containing the water vapor from flowing backwards to the air blower, the air blower may be driven. Nevertheless, when the air blower is driven in a state where the fuel cell is at a high temperature after its stop, for example, the fuel cell at a high temperature is only supplied with air, which may cause oxidation degradation of the fuel cell.

A need thus exists for a fuel cell system where fans are provided at an air intake side and an air exhaust side so that the inside of the fuel cell system selectively turns to a negative pressure and a positive pressure by driving of the fans.
JP2011204446 relates to a solid oxide fuel cell system.
JP2005235635 relates to a ventilator of a fuel cell system.

### SUMMARY

Aspects of the invention are defined in the accompanying claims. According to an example of this disclosure, a fuel cell system includes a fuel cell generating an electric power from a fuel and an oxidant gas, a combusting portion generating an exhaust combustion gas by burning an anode off-gas from the fuel cell and a cathode off-gas from the fuel cell, an oxidant gas supply device supplying the oxidant gas to the combusting portion, a
casing housing the fuel cell and the combusting portion, a fuel cell chamber installed in an indoor environment and at least housing the casing and the oxidant gas supply device, the fuel cell chamber including an airtight structure, a ventilation exhaust line including an intake portion that suctions air from an outdoor environment to send the air into the fuel cell chamber and an exhaust portion that discharges air within the fuel cell chamber into the outdoor environment, a combustion exhaust line including a cathode air supply pipe that connects an inside of the fuel cell chamber and the fuel cell each other to supply air including the oxidant gas within the fuel cell chamber to the fuel cell and an exhaust pipe that connects the combusting portion and an outside of the fuel cell chamber each other to discharge the exhaust combustion gas generated at the combusting portion into the outdoor environment, a first fan provided at the intake portion of the ventilation exhaust line to suction air into the fuel cell chamber, a second fan provided at the exhaust portion of the ventilation exhaust line to discharge air from the fuel cell chamber, and a control unit controlling the first fan and the second fan.

Accordingly, because of a driving of the first fan, the inside of the fuel cell chamber is maintained at a positive pressure. Therefore, the inside of the fuel cell chamber is held at the positive pressure in a state where the fuel cell system is stopped, for example, so that an adverse effect caused by a negative pressure within the fuel cell chamber as in a known art may be eliminated even when the oxidant gas supply device is stopped. That is, the inside of the fuel cell chamber is maintained at the positive pressure so that the air including the water vapor is inhibited from flowing backwards from the casing that houses the fuel cell. The air including the water may be securely discharged or emitted through the combustion exhaust line.

At least the second fan is driven during a power generation operation of the fuel cell system to maintain the inside of the fuel cell chamber at a negative pressure.

Accordingly, during the power generation operation of the fuel cell system, the second fan is driven to maintain the inside of the fuel cell chamber at the negative pressure. Thus, even if gas flows out from the casing that houses the fuel cell into the fuel cell chamber, the gas is securely restrained from flowing out from the fuel cell chamber into the indoor environment around the fuel cell chamber.

The second fan includes an air exhaust capacity greater than an air intake capacity of the first fan.

Accordingly, because the air exhaust capacity of the second fan is greater than the air intake capacity of the first fan, the inside of the fuel cell chamber may become the negative pressure while the inside of the fuel cell chamber is cooled and ventilated by the first fan.

The fuel cell system further includes an evaporating portion that generates a water vapor by evaporating water for reforming, wherein the control unit drives the first fan until a generation of a water vapor within the casing is stopped after a stop operation of the fuel cell system is started.

Accordingly, the first fan is driven until the generation of the water vapor at the casing that houses the fuel cell is stopped after the start of the stop operation of the fuel cell system. Thus, the inside of the fuel cell chamber may be maintained at the positive pressure until the generation of the water vapor within the casing is stopped. Accordingly, the water vapor is inhibited from flowing backwards from the oxidant gas supply apparatus that is stopped because of the negative pressure within the fuel cell chamber as in a known art. The oxidant gas supply apparatus (air blower), for example, is restrained from being damaged or broken.

The control unit determines that the generation of the water vapor within the casing is stopped in a case where any one of first, second and third conditions is detected, the first condition where a change mode of a temperature of the evaporating portion is shifted from an increasing mode to a decreasing mode, the second condition where the temperature of the evaporating portion becomes equal to or smaller than a predetermined temperature, the third condition where a predetermined time elapses after the power generation operation of the fuel cell system is stopped.

Accordingly, even in a case where a temperature sensor that detects the temperature of the evaporating portion is broken or a timer that detects an elapse of time is broken, for example, the first fan is inhibited from being continuously driven, which restrains an increase of power consumption in a standby state of the fuel cell system, for example.

The first fan is driven on a basis of a drive signal of a combustion apparatus in a standby state of the fuel cell system, the combustion apparatus being installed in the indoor environment and being connected to the intake portion and the exhaust portion of the fuel cell chamber.

Accordingly, the first fan is driven on a basis of the drive signal of the combustion apparatus even when the fuel cell system is in the standby state. Thus, the inside of the fuel cell chamber may be maintained at the positive pressure while the combustion apparatus is being driven even in the standby state of the fuel cell system. Exhaust gas, for example, of the combustion apparatus is restrained from flowing backwards to the fuel cell chamber.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating a state where exhaust air from a fuel cell system and exhaust air from a combustion apparatus are joined together at a chimney according to an embodiment disclosed here;
Fig. 2 is a schematic view schematically illustrating the fuel cell system according to the embodiment; and
Fig. 3 is a time chart illustrating operations of a fan and other members of the fuel cell system illustrated in Fig. 2.

### DETAILED DESCRIPTION

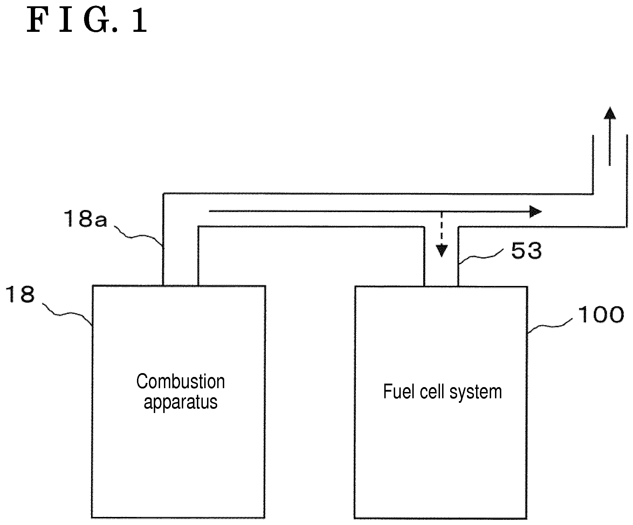

A fuel cell system according to an embodiment is explained with reference to the attached drawings. As illustrated in Fig. 1, a fuel cell system 100 is installed in an indoor environment together with a combustion apparatus 18 such as a boiler, for example. The combustion apparatus 18 combustions or burns source gas in a hydrocarbon system, for example, together with air for hot water supply. A chimney 18a (exhaust exit) of the combustion apparatus 18 is in communication with a chimney portion 53 (exhaust exit portion) of the fuel cell system 100.

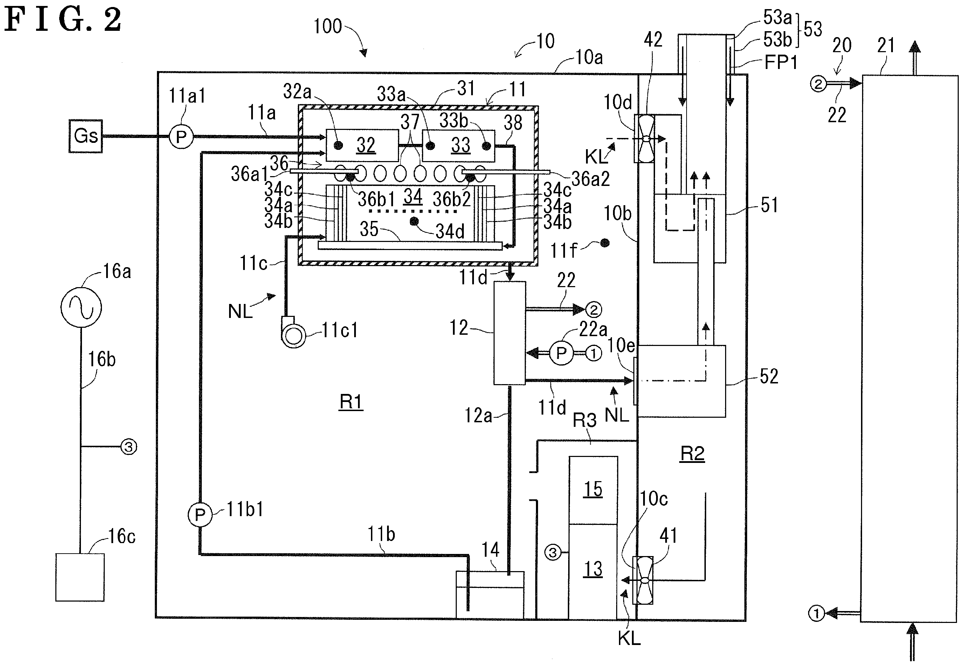

As illustrated in Fig. 2, the fuel cell system 100 includes a power generation unit 10 and a water storage tank 21. The power generation unit 10 includes a housing 10a, a fuel cell module 11, a heat exchanger 12, an inverter device 13, a water tank 14, and a control unit 15.

The fuel cell module 11 is configured to include at least a fuel cell 34. The fuel cell module 11 is supplied with source material (fuel), water for reforming (water), and cathode air (oxidant gas). Specifically, the fuel cell module 11 is connected to a first end of a fuel supply pipe 11 a of which a second end is connected to a supply source Gs so that the source material is supplied to the fuel supply pipe 11 a. A fuel pump 11 a1 is provided at the fuel supply pipe 11 a. In addition, the fuel cell module 11 is connected to a first end of a water supply pipe 11 b of which a second end is connected to the water tank 14 so that the water is supplied to the water supply pipe 11 b. A water pump 11 b1 is provided at the water supply pipe 11 b. Further, the fuel cell module 11 is connected to a first end of a cathode air supply pipe 11 c of which a second end is connected to a cathode air blower 11 c1 serving as an oxidant gas supply device so that the cathode air is supplied to the cathode air supply pipe 11c.

The heat exchanger 12 is supplied with exhaust combustion gas emitted or discharged from the fuel cell module 11 and with storage water stored at the water storage tank 21 to perform a heat exchange between the exhaust combustion gas and the storage water. Specifically, the water storage tank 21 which stores water (hot or warmed water) serving as the storage water is connected to a water circulation line 22 at which the water (storage water) circulates in a direction indicated by arrows in Fig. 2. A water circulation pump 22a and the heat exchanger 12 are arranged in the mentioned order from a lower end to an upper end at the water circulation line 22. An exhaust pipe 11 d from the fuel cell module 11 is connected to the heat exchanger 12 in a penetration manner. A condensed water supply pipe 12a which is connected to the water tank 14 is connected to the heat exchanger 12.

The exhaust combustion gas from the fuel cell module 11 is led to the heat exchanger 12 by flowing through the exhaust pipe 11 d and is condensed and cooled at the heat exchanger 12 because of the heat exchange with the storage water. The exhaust combustion gas after condensation flows through the exhaust pipe 11 d and an exhaust combustion gas port 10e to be discharged to the outside of the fuel cell system 100. Condensed water resulting from the aforementioned heat exchange flows through the condensed water supply pipe 12a so as to be supplied to the water tank 14. The water tank 14 brings the condensed water to be formed into pure water (deionized water) by means of ion-exchange resin.

The heat exchanger 12, the water storage tank 21, and the water circulation line 22 constitute an exhaust heat recovery system 20. The exhaust heat recovery system 20 recovers exhaust heat of the fuel cell module 11 and stores the exhaust heat in the storage water.

The inverter device 13 receives a direct-current (DC) voltage output from the fuel cell 34 and converts the DC voltage into a predetermined alternating-current (AC) voltage so as to output the AC voltage to a power line 16b connected to an alternating system power supply 16a (hereinafter simply referred to as a system power supply 16a) and an external electric power load 16c (hereinafter simply referred to as an external power load 16c) such as an electrical appliance, for example. The inverter device 13 also receives an AC voltage from the system power supply 16a via the power line 16b and converts the AC voltage into a predetermined DC voltage so as to output the DC voltage to an auxiliary machinery and/or the control unit 15. The auxiliary machinery includes the water pump 11 b1, the fuel pump 11 a1, and the cathode air blower 11 c1, for example, for supplying the source material, water, and air to the fuel cell module 11. The auxiliary machinery is driven by the DC voltage.

The fuel cell module 11 includes a casing 31, an evaporating portion 32, a reforming portion 33, the fuel cell 34, and a combusting portion 36. The casing 31 in a box form is made of an insulative material.

The evaporating portion 32, which is heated by combustion gas, evaporates water (water for reforming) supplied to the evaporating portion 32 so as to generate water vapor. The evaporating portion 32 also preheats the source material (fuel) supplied to the evaporating portion 32. The evaporating portion 32 mixes the water vapor generated in the aforementioned manner and the source material that is preheated so as to supply the mixture to the reforming portion 33. The source material corresponds to gaseous fuel (gaseous fuel for reforming) such as natural gas and LPG (liquefied petroleum gas), for example, and liquid fuel (liquid fuel for reforming) such as kerosene, gasoline (petrol) and methanol, for example. In the explanation of the present embodiment, the source material corresponds to the natural gas.

The evaporating portion 32 is connected to the first end of the water supply pipe 11 b of which the second end (lower end) is connected to the water tank 14. In addition, the evaporating portion 32 is connected to the first end of the fuel supply pipe 11 a of which the second end is connected to the supply source Gs. The supply source Gs corresponds to a city gas supply pipe or an LPG gas cylinder, for example. The evaporation portion 32 includes a temperature sensor 32a detecting a temperature within the evaporating portion 32. The temperature sensor 32a transmits a detection result to the control unit 15.

The reforming portion 33 is heated by the aforementioned combustion gas so as to receive heat necessary for a water vapor reforming reaction. The reforming portion 33 generates reformed gas from mixed gas (source material and water vapor) supplied from the evaporating portion 32 and discharges the reformed gas. The inside of the reforming portion 33 is filled with a catalyst, for example, a ruthenium catalyst (Ru catalyst) or a nickel catalyst (Ni catalyst). The mixed gas supplied from the evaporating portion 32 reacts by means of the catalyst so as to be reformed, thereby generating hydrogen gas and gas containing carbon monoxide, for example (water vapor reforming reaction). The reformed gas includes hydrogen, carbon monoxide, carbon dioxide, water vapor, natural gas (methane gas) that is not reformed, and water (water vapor) not used for reforming. Accordingly, the reforming portion 33 generates the reformed gas (fuel) from the source material (source fuel) and the water for reforming to supply the reformed gas to the fuel cell 34. The water vapor reforming reaction is an endothermic reaction.

The reforming portion 33 includes a temperature sensor 33a that detects a temperature of a portion where the source material and the water for reforming (water vapor) flow into. The temperature sensor 33a is provided at a portion of the reforming portion 33 where the source material and the water for reforming (water vapor) flow into. The temperature sensor 33a transmits a detection result to the control unit 15. The reforming portion 33 also includes a temperature sensor 33b that detects a temperature of a portion where the reformed gas flows out. The temperatures sensor 33b is provided at a portion of the reforming portion 33 where the reformed gas flows out. The temperature sensor 33b transmits a detection result to the control unit 15.

The fuel cell 34 includes a lamination of plural cells 34a each including a fuel electrode, an air electrode (an oxidant electrode), and an electrolyte disposed between the fuel electrode and the air electrode. The fuel cell 34 according to the present embodiment is a solid oxide fuel cell (SOFC) where zirconium oxide serving as a solid oxide is used as the electrolyte. The fuel electrode of the fuel cell 34 is supplied with hydrogen, carbon monoxide, and methane gas, for example, as fuel. An operating temperature of the fuel cell 34 is substantially in a range from 400 °C to 1,000 °C. Not only hydrogen is used as the fuel but also natural gas or coal gas may be directly used as the fuel. When the natural gas or the coal gas is directly used as the fuel, the reforming portion 33 may be omitted.

A fuel flow passage 34b through which the reformed gas serving as the fuel flows is formed at the fuel electrode of each of the cells 34a. An air flow passage 34c through which the air (cathode air) serving as the oxidant gas flows is formed at the air electrode of each of the cells 34a. The fuel cell 34 includes a fuel cell temperature sensor 34d that detects a temperature of the fuel cell 34. The fuel cell temperature sensor 34d transmits a detection result to the control unit 15.

The fuel cell 34 is placed on a manifold 35. The reformed gas is supplied from the reforming portion 33 to the manifold 35 via a reformed gas supply pipe 38. A lower end (a first end) of the fuel flow passage 34b is connected to a fuel lead-out port formed at the manifold 35. The reformed gas led out from the fuel lead-out port of the manifold 35 is introduced from the lower end of the fuel flow passage 34b and is discharged from an upper end of the fuel flow passage 34b. The cathode air sent from the cathode air blower 11 c1 flows through the cathode air supply pipe 11c so as to be supplied from a lower end of the air flow passage 34c and be discharged from an upper end of the air flow passage 34c.

The combusting portion 36 is disposed among the fuel cell 34, the evaporating portion 32, and the reforming portion 33. The combusting portion 36 heats the reforming portion 33 by burning anode off-gas (fuel off-gas) from the fuel cell 34 and cathode off-gas (oxidant off-gas) from the fuel cell 34.

The anode off-gas is burnt at the combusting portion 36 so as to generate flames 37. First and second ignition heaters 36a1 and 36a2 are provided at the combusting portion 36 to ignite the anode off-gas. In addition, first and second temperature sensors 36b1 and 36b2 are provided at the combusting portion 36 to detect a temperature at the combusting portion 36. Each of the first and second temperature sensors 36b1 and 36b2 transmits a detection result to the control unit 15.

The housing 10a is divided by an inner panel 10b into a fuel cell chamber R1 and an exhaust duct chamber R2 each of which includes an airtight structure. The fuel cell chamber R1 houses or accommodates therein the fuel cell module 11, the heat exchanger 12, the invertor device 13, the water tank 14, and the control unit 15. A temperature sensor 11f is provided at the fuel cell chamber R1 to detect a temperature within the fuel cell chamber R1. The exhaust duct chamber R2 houses therein a ventilation exhaust duct 51 and a combustion exhaust duct 52.

An air intake port 10c suctioning outside air to send the outside air into the fuel cell chamber R1, a ventilation air exhaust port 10d emitting or discharging air within the fuel cell chamber R1 into an outdoor environment, and the exhaust combustion gas port 10e emitting or discharging the exhaust combustion gas from the heat exchanger 12 to an outside are formed at the inner panel 10b constituting one side of the fuel cell chamber R1.

A first ventilation fan 41 serving as a first fan is provided at the air intake port 10c. The first ventilation fan 41 suctions air from the exhaust duct chamber R2 to send the air into the fuel cell chamber R1 via a control chamber R3 which is explained later.

The ventilation air exhaust port 10d is connected to a first end of the ventilation exhaust duct 51. A second end of the ventilation exhaust duct 51 is connected to an inner pipe 53a of the chimney portion 53. A second ventilation fan 42 serving as a second fan is provided at the ventilation air exhaust port 10d. An air exhaust capacity (ventilation capacity) of the second ventilation fan 42 is greater than an air intake capacity (ventilation capacity) of the first ventilation fan 41.

The second ventilation fan 42 discharges or emits air within the fuel cell chamber R1 into the outdoor environment from the inner pipe 53a of the chimney portion 53 via the ventilation exhaust duct 51. In a case where the second ventilation fan 42 is driven, the air (ventilation exhaust air) within the fuel cell chamber R1 is discharged or emitted into the outdoor environment by flowing through the ventilation air exhaust port 10d, the ventilation exhaust duct 51, and the inner pipe 53a of the chimney portion 53 as indicated by arrows with broken lines.

The control chamber R3 is formed within the fuel cell chamber R1. A first end of the control chamber R3 is connected to the air intake port 10c and a second end of the control chamber R3 is connected to the fuel cell chamber R1 to be positioned within the fuel cell chamber R1. The control chamber R3 houses or accommodates therein the invertor device 13 and the control unit 15. Accordingly, the air taken or suctioned via the air intake port 10c by the first ventilation fan 41 is sent to the fuel cell chamber R1 by passing through the control chamber R3 to cool the invertor device 13 and the control unit 15 housed within the control chamber R3.

A ventilation exhaust line KL includes the air intake port 10c provided within the housing 10a to suction the air from the outside and the ventilation air exhaust port 10d provided within the housing 10a to discharge or emit the air within the fuel cell chamber R1. The ventilation exhaust line KL takes in the air from the outside by the first ventilation fan 41 so that the air flows through the fuel cell chamber R1 defined at the inside of the housing 10a and sends out the air from the ventilation air exhaust port 10d. The air intake port 10c constitutes an intake portion of the ventilation exhaust line KL while the ventilation air exhaust port 10d constitutes an exhaust portion of the ventilation exhaust line KL.

The exhaust combustion gas port 10e is connected to a first end of the combustion exhaust duct 52. A second end of the combustion exhaust duct 52 is connected to the ventilation exhaust duct 51. During a power generation of the fuel cell system 100, the exhaust combustion gas emitted from the fuel cell module 11 passes through the exhaust combustion gas port 10e and the combustion exhaust duct 52 to be led out to the ventilation exhaust duct 51 (indicated by arrows with alternate long and short dash lines) so as to join with the ventilation exhaust air. The resulting gas flows through the ventilation exhaust duct 51 and the inner pipe 53a of the chimney portion 53 to be discharged or emitted into the outdoor environment.

A combustion exhaust line NL includes the cathode air supply pipe 11c connecting the fuel cell chamber R1 (specifically, the inside of the fuel cell chamber R1) and the fuel cell 34 each other to supply the air including the oxidant gas within the fuel cell chamber R1 to the fuel cell 34, and the exhaust pipe 11 d connecting the combusting portion 36 and the outside of the fuel cell chamber R1 each other to discharge the exhaust combustion gas generated at the combusting portion 36 into the outdoor environment. The combustion exhaust line NL is branched from a portion of the ventilation exhaust line KL by the cathode air supply pipe 11c so as to be independently provided.

The chimney portion 53 includes a double pipe configuration constituted by the inner pipe 53a and an outer pipe 53b. An air intake flow passage FP1 is formed between the inner pipe 53a and the outer pipe 53b. The air intake flow passage FP1 connects the outdoor environment and the exhaust duct chamber R2 each other. The outside air passes through the air intake flow passage FP1 to flow into (to be taken into) the exhaust duct chamber R2. The chimney 18a of the combustion apparatus 18 (see Fig. 1) also includes the similar double pipe configuration.

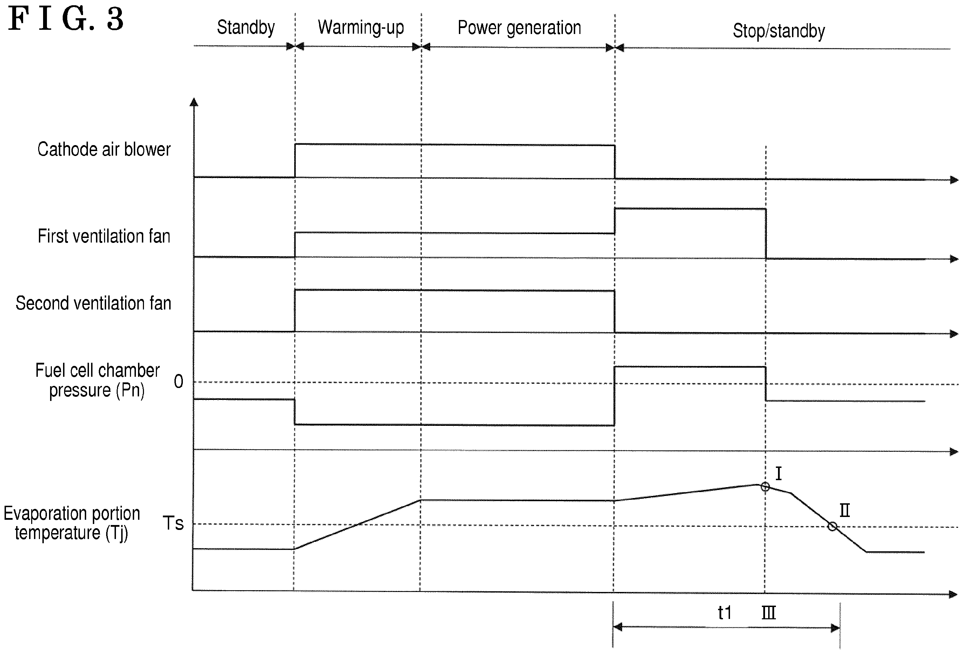

The control unit 15 controls the first ventilation fan 41 and the second ventilation fan 42 depending on the operation condition of the fuel cell system 100. An example of controlling the first ventilation fan 41 and the second ventilation fan 42 is explained on a basis of a time-chart in Fig. 3.

In a standby state of the fuel cell system 100, the fuel pump 11a1, the cathode air blower 11c1, the first ventilation fan 41, and the second ventilation fan 42 are stopped respectively. A temperature Tj of the evaporating portion 32 is maintained at a substantially room temperature in the standby state of the fuel cell system 100. In the present embodiment, a pressure Pn within the fuel cell chamber R1 connected to the chimney portion 53 is configured to be a negative pressure because of an air intake and exhaust pressure difference caused by an influence of outside air to the chimney portion 53.

In a case where a start switch of the fuel cell system 100 is turned on, the fuel cell system 100 is started to initiate a warm-up operation (the fuel cell system 100 does not perform a power generation operation, however, each of the reforming portion 33 and the fuel cell 34 is heated to a power generation operation temperature).

Once the warm-up operation is started, the control unit 15 controls the auxiliary machinery to operate. Specifically, the control unit 15 drives the fuel pump 11a1 and the water pump 11b1 to supply the source material and the condensed water (water for reforming) to the evaporating portion 32. In addition, the control unit 15 drives the cathode air blower 11 c1 to start supplying the cathode air to the fuel cell 34. Then, at the combusting portion 36, the anode off-gas introduced by the fuel cell system 34 is ignited by the first and second ignition heaters 36a1 and 36a2. In a case where the temperature of each of the reforming portion 33 and the fuel cell 34, for example, reaches or exceeds a predetermined temperature, the warm-up operation is finished to start the power generation operation. During the power generation operation, the control unit 15 controls the auxiliary machinery so that an electric power generated by the fuel cell 34 is equalized with a consumed electric power of the external power load 16c and supplies the reforming gas and the cathode air to the fuel cell 34.

When the warm-up operation is started, as illustrated in Fig. 3, the first ventilation fan 41 and the second ventilation fan 42 are driven respectively. At this time, because the exhaust capacity of the second ventilation fan 42 is greater than the intake capacity of the first ventilation fan 41, the inside of the fuel cell chamber R1 is further negatively pressurized so that the temperature within the fuel cell chamber R1 decreases.

Because the inside of the fuel cell chamber R1 is maintained at the negative pressure, even if combustible gas such as the source material and the fuel, for example, flows out from the casing 31 into the fuel cell chamber R1, the combustible gas is restrained from flowing into the indoor environment around the fuel cell system 100. The combustible gas may be emitted or discharged to the outdoor environment via the chimney portion 53 from the ventilation air exhaust port 10d of the ventilation exhaust line KL, which may enhance safety.

In a case where the temperature of the fuel cell system 100 increases to a value at which the power generation of the fuel cell system 100 is achievable, the operation of the fuel cell system 100 is changed from the warm-up operation to the power generation operation (i.e., the fuel cell system 100 is brought to a power generation operation state). At this time, the temperature of the evaporating portion 32 increases to a value at which the water (water for reforming) supplied to the evaporating portion 32 is evaporated to generate the water vapor.

In a case where the start switch of the fuel cell system 100 is turned off, the fuel cell system 100 is shifted from the power generation operation state to a stop/standby state (i.e., the fuel cell system 100 performs a stop operation or a standby operation).

In a case where the fuel cell system 100 is brought to the stop/standby state, the control unit 15 stops the fuel pump 11a1 and the cathode air blower 11 c1 to thereby stop the supply of the source material and the cathode air.

At the same time, the control unit 15 controls the second ventilation fan 42 to be stopped and performs a duty control on the first ventilation fan 41 so that the first ventilation fan 41 is driven to rotate at a faster speed than a speed obtained during the power generation operation. Accordingly, the pressure Pn within the fuel cell chamber R1 increases to be switched to the positive pressure from the negative pressure.

Accordingly, even when the cathode air blower 11 c1 is stopped while the fuel cell system 100 is in the stop/standby state, the pressure within the fuel cell chamber R1 is maintained at the positive pressure. Thus, the air containing the water vapor generated at the evaporating portion 32 is inhibited from flowing backwards from the casing 31 to the fuel cell chamber R1 via the cathode air blower 11 c1.

Specifically, in association with the start of the stop operation of the fuel cell system 100, i.e., after the second ventilation fan 42 is stopped and a process where the supply of the cathode air and the source material is stopped is initiated, the first ventilation fan 41 is driven to thereby maintain the inside of the fuel cell chamber R1 at the positive pressure. The air containing the water vapor is inhibited from flowing backwards from the casing 31 to the fuel cell chamber R1 via the cathode air blower 11c1 and is emitted from the combustion exhaust line NL.

In the aforementioned embodiment, the first ventilation fan 41 is duty-controlled so that the inside of the fuel cell chamber R1 may be maintained at the negative pressure or the positive pressure by a suction power difference between the first ventilation fan 41 and the second ventilation fan 42. Nevertheless, even when the first ventilation fan 41 is stopped while the second ventilation fan 42 is being driven or the first ventilation fan 41 is driven while the second ventilation fan 42 is being stopped, the inside of the fuel cell chamber R1 may be maintained at the negative pressure or the positive pressure. Thus, the duty control is not necessary.

In a case where it is detected that the generation of the water vapor within the casing 31 that houses the fuel cell 34 is stopped (finished) in association with the start of the standby operation of the fuel cell system 100, the first ventilation fan 41 is controlled to be stopped. Accordingly, because the generation of the water vapor is stopped, the air containing the water vapor is inhibited from flowing backwards from the cathode air blower 11c1 even in a case where the first ventilation fan 41 is stopped and the inside of the fuel cell chamber R1 turns to the negative pressure.

The stop of the generation of the water vapor within the casing 31 is detectable, for example, by determining that a change mode of the temperature Tj of the evaporating portion 32 is shifted or switched from an increasing mode to a decreasing mode as illustrated by I in Fig. 3. Specifically, the control unit 15 samples detection temperatures of the temperature sensor 32a that detects the temperature Tj of the evaporating portion 32 per predetermined or fixed period of time and compares two consecutive detection temperatures after sampling so as to determine that the change mode of the temperature Tj of the evaporating portion 32 is shifted from the increasing mode to the decreasing mode. In this case, the shifting of the change mode of the temperature Tj of the evaporating portion 32 from the increasing mode to the decreasing mode may be determined in a case where the aforementioned shifting is detected plural times consecutively.

In addition, the stop of the generation of the water vapor within the casing 31 is detectable, for example, by determining that the temperature Tj of the evaporating portion 32 becomes equal to or smaller than a preliminarily specified determination temperature Ts serving as a predetermined temperature (threshold value) by the temperature sensor 32a detecting the temperature Tj of the evaporating portion 32 as illustrated by II in Fig. 3 In this case, the determination temperature Ts is specified so that the water vapor is inhibited from being generated at the determination temperature Ts.

Further, the stop of the generation of the water vapor within the casing 31 is detectable, for example, by detecting an elapse of a predetermined time t1 (threshold value) after the start of the stop operation of the fuel cell system 100 by a timer as illustrated by III in Fig. 3. In this case, the predetermined time t1 is specified to be a sufficient time period so that the generation of the water vapor is stopped after the start of the stop operation of the fuel cell system 100.

During the operation (i.e., the warm-up operation and the power generation operation) of the fuel cell system 100, the ventilation exhaust air (ventilation air) and the exhaust combustion gas (exhaust gas) are emitted or discharged from the fuel cell system 100 towards the chimney portion 53. Thus, even when the combustion apparatus 18 (see Fig. 1) such as the boiler, for example, is driven, the exhaust gas or fume of the combustion apparatus 18 is inhibited from flowing backwards to the fuel cell system 100. In addition, in a case where the fuel cell system 100 is stopped, the first ventilation fan 41 is driven while the combustion apparatus 18 is being driven. Thus, the inside of the fuel cell chamber R1 may be maintained at the positive pressure by the first ventilation fan 41, which restrains the exhaust gas or fume of the combustion apparatus 18, for example, from flowing backwards to the fuel cell system 100 (fuel cell chamber R1).

According to the aforementioned embodiment, the fuel cell system 100 includes the first ventilation fan 41 (first fan) provided at the air intake port 10c (intake portion) of the ventilation exhaust line KL to suction or take the air into the fuel cell chamber R1 and the second ventilation fan 42 (second fan) provided at the ventilation air exhaust port 10d (exhaust portion) of the ventilation exhaust line KL to discharge or emit the air from the fuel cell chamber R1.

Accordingly, because of the driving of the first ventilation fan 41 provided at the air intake port 10c, the inside of the fuel cell chamber R1 is maintained at the positive pressure. Therefore, the inside of the fuel cell chamber R1 is held at the positive pressure in a state where the fuel cell system 100 is in the standby operation, for example, so that an adverse effect caused by the negative pressure within the fuel cell chamber 100 as in a known art may be eliminated even when the cathode air blower 11 c1 is stopped. That is, the inside of the fuel cell chamber R1 is maintained at the positive pressure so that the air containing the water vapor is inhibited from flowing backwards from the casing 31 that houses the fuel cell 34. The air containing the water vapor may be securely discharged or emitted through the combustion exhaust line NL.

In addition, because of the driving of the second ventilation fan 42 provided at the ventilation air exhaust port 10d, the inside of the fuel cell chamber R1 is maintained at the negative pressure during the power generation operation of the fuel cell system 100. Even if the combustible gas such as the source material and the fuel, for example, flows out from the casing 31 that houses the fuel cell 34 into the fuel cell chamber R1, the combustible gas is inhibited from flowing to the indoor environment around the fuel cell chamber R1.

In the aforementioned embodiment, the exhaust capacity of the second ventilation fan 42 is greater than the intake capacity of the first ventilation fan 41. Thus, while the inside of the fuel cell chamber R1 is cooled and ventilated by the first ventilation fan 41, the inside of the fuel cell chamber R1 may become the negative pressure by the second ventilation fan 42.

Further, in the aforementioned embodiment, the first ventilation fan 41 is driven until the generation of the water vapor at the casing 31 that houses the fuel cell 34 is stopped after the start of the stop operation of the fuel cell system 100. Thus, the inside of the fuel cell chamber R1 may be maintained at the positive pressure until the generation of the water vapor within the casing 31 is stopped. Accordingly, the water vapor within the casing 31 is inhibited from flowing backwards by the cathode air blower 11c1 that is stopped because of the negative pressure within the fuel cell chamber R1 as in a known art. The cathode air blower 11c1, for example, is restrained from being damaged or broken.

Furthermore, in the aforementioned embodiment, the stop of the generation of the water vapor within the casing 31 is detected by the shifting of the change mode of the temperature of the evaporating portion 32 from the increasing mode to the decreasing mode. Thus, the stop of the generation of the water vapor is accurately determinable on a basis of the temperature change of the evaporating portion 32.

Furthermore, in the aforementioned embodiment, the stop of the generation of the water vapor within the casing 31 is detected by the temperature of the evaporating portion 32 being equal to or smaller than the predetermined temperature. Thus, the stop of the generation of the water vapor is easily determinable.

Furthermore, in the aforementioned embodiment, the stop of the generation of the water vapor within the casing 31 is detected by the elapse of the predetermined time after the stop of the power generation operation of the fuel cell system 100. Thus, the elapse of sufficient time period after the stop of the power generation operation of the fuel cell system 100 may lead to the easy determination of the stop of the generation of the water vapor.

Furthermore, in the aforementioned embodiment, the first ventilation fan 41 is driven on a basis of a drive signal of the combustion apparatus 18 even when the fuel cell system 100 is in the stop/standby state. Thus, the inside of the fuel cell chamber R1 may be maintained at the positive pressure by the first ventilation fan 41 while the combustion apparatus 18 is being driven even in the stop/standby state of the fuel cell system 100. The exhaust gas of the combustion apparatus 18 is restrained from flowing backwards to the fuel cell chamber R1, for example.

In the aforementioned embodiment, the example where the exhaust capacity of the second ventilation fan 42 is greater than the intake capacity of the first ventilation fan 41 is explained. Alternatively, the respective capacities of the first ventilation fan 41 and the second ventilation fan 42 may be equalized with each other. In order to bring the inside of the fuel cell chamber R1 to the negative pressure, the second ventilation fan 42 may be only driven. In order to bring the inside of the fuel cell chamber R1 to the positive pressure, the first ventilation fan 41 may be only driven. Further alternatively, the respective capacities of the first ventilation fan 41 and the second ventilation fan 42 may be equalized with each other and the ventilation capacity of the first ventilation fan 41 may increase depending on a duty ratio difference.

In the aforementioned embodiment, the stop of the generation of the water vapor within the casing 31 after the start of the stop operation of the fuel cell system 100 is determined by employing any one of the following conditions; the shifting of the change mode of the temperature of the evaporating portion 32, the comparison of the temperature of the evaporating portion 32 with the threshold value, and the comparison of the elapse of time after the start of the stop operation of the fuel cell system 100 with the threshold value. Specifically, the stop of the generation of the water vapor within the casing 31 is determined by the shifting of the change mode of the temperature of the evaporating portion 32 from the increasing mode to the decreasing mode (first condition), by the temperature of the evaporating portion 32 equal to or smaller than the predetermined temperature (second condition), or by the elapse of the predetermined time after the stop of the power generation operation of the fuel cell system 100 (third condition). Alternatively, for example, two of or three of the aforementioned three conditions (the shifting of the change mode of the temperature of the evaporating portion 32, the comparison of the temperature of the evaporating portion 32 with the threshold value, and the comparison of the elapse of time after the start of the stop operation of the fuel cell system 100 with the threshold value) may be employed so that the stop of the generation of the water vapor within the casing 31 is determined in a case where any one of two or three conditions is detected.

Accordingly, even in a case where the temperature sensor 32a that detects the temperature of the evaporating portion 32 is broken or the timer that detects the elapse of time is broken, for example, the first ventilation fan 41 is inhibited from being continuously driven, which restrains increase of power consumption in the standby state of the fuel cell system 100.

The aforementioned construction of the fuel cell system 100 is an example and may be appropriately and variously modified or changed.

## Claims

1. A fuel cell system (100) comprising:
a fuel cell (34) generating an electric power from a fuel and an oxidant gas;
a combusting portion (36) generating an exhaust combustion gas by burning an anode off-gas from the fuel cell (34) and a cathode off-gas from the fuel cell (34);
an oxidant gas supply device (11 c1) supplying the oxidant gas to the combusting portion (36);
a casing (31) housing the fuel cell (34) and the combusting portion (36);
a fuel cell chamber (R1) installed in an indoor environment and at least housing the casing (31) and the oxidant gas supply device (11c1), the fuel cell chamber (R1) including an airtight structure;
a ventilation exhaust line (KL) including an intake portion (10c) that suctions air from an outdoor environment to send the air into the fuel cell chamber (R1) and an exhaust portion (10d) that discharges air within the fuel cell chamber (R1) into the outdoor environment;
a combustion exhaust line (NL) including a cathode air supply pipe (11c) that connects an inside of the fuel cell chamber (R1) and the fuel cell (34) each other to supply air including the oxidant gas within the fuel cell chamber (R1) to the fuel cell (34) and an exhaust pipe (11d) that connects the combusting portion (36) and an outside of the fuel cell chamber (R1) each other to discharge the exhaust combustion gas generated at the combusting portion (36) into the outdoor environment;
a first fan (41) provided at the intake portion (10c) of the ventilation exhaust line (KL) to suction air into the fuel cell chamber (R1);
a second fan (42) provided at the exhaust portion (10d) of the ventilation exhaust line (KL) to discharge air from the fuel cell chamber (R1); and
a control unit (15) controlling the first fan (41) and the second fan (42), the fuel cell system further comprising an evaporating portion (32) that generates a water vapor by evaporating water for reforming,
wherein the control unit (15) drives at least the second fan (42) during a power generation operation of the fuel cell system (100) to maintain the inside of the fuel cell chamber (R1) at a negative pressure,
wherein the control unit (15) controls the second fan (42) to be stopped and drives the first fan (41) to maintain the inside of the fuel cell chamber (R1) at a positive pressure until a generation of water vapour within the casing (31) is stopped after a stop operation of the fuel cell system (100) is started.

2. The fuel cell system (100) according to claim 1 wherein the second fan (42) includes an air exhaust capacity greater than an air intake capacity of the first fan (41).

3. The fuel cell system (100) according to claim 1, wherein the control unit (15) determines that the generation of the water vapor within the casing (31) is stopped in a case where any one of first, second and third conditions is detected, the first condition where a change mode of a temperature of the evaporating portion (32) is shifted from an increasing mode to a decreasing mode, the second condition where the temperature of the evaporating portion (32) becomes equal to or smaller than a predetermined temperature, the third condition where a predetermined time elapses after the power generation operation of the fuel cell system (100) is stopped.

4. The fuel cell system (100) according to any one of claims 1 through 3, wherein the first fan (41) is driven on a basis of a drive signal of a combustion apparatus (18) in a standby state of the fuel cell system (100), the combustion apparatus (18) being installed in the indoor environment and being connected to the intake portion (10c) and the exhaust portion (10d) of the fuel cell chamber (R1).

## Patentansprüche

1. Brennstoffzellensystem (100) mit:
einer Brennstoffzelle (34), die eine elektrische Leistung aus einem Brennstoff und einem Oxidationsgas erzeugt;
einem Verbrennungsabschnitt (36), der ein Ausstoßverbrennungsgas durch Verbrennen eines Anodenabgases von der Brennstoffzelle (34) und eines Kathodenabgases von der Brennstoffzelle (34) erzeugt;
einer Oxidationsgaszufuhreinrichtung (11c1), die das Oxidationsgas dem Verbrennungsabschnitt (36) zuführt;
einem Gehäuse (31), das die Brennstoffzelle (34) und den Verbrennungsabschnitt (36) aufnimmt;
einer Brennstoffzellenkammer (R1), die in einer Innenumgebung eingebaut ist und mindestens das Gehäuse (31) und die Oxidationsgaszufuhreinrichtung (11c1) aufnimmt, wobei die Brennstoffzellenkammer (R1) einen luftdichten Aufbau enthält;
einer Belüftungsausstoßleitung (KL), die einen Einlassabschnitt (10c), der Luft von einer Außenumgebung ansaugt, um die Luft in die Brennstoffzellenkammer (R1) zu leiten, und einen Ausstoßabschnitt (10d) enthält, der Luft innerhalb der Brennstoffzellenkammer (R1) in die Außenumgebung abgibt;
einer Verbrennungsausstoßleitung (NL), die eine Kathodenluftzuführungsrohrleitung (11c), die ein Inneres der Brennstoffzellenkammer (R1) und die Brennstoffzelle (34) miteinander verbindet, um das Oxidationsgas enthaltende Luft innerhalb der Brennstoffzellenkammer (R1) der Brennstoffzelle (34) zuzuführen, und eine Ausstoßrohrleitung (11d) enthält, die den Verbrennungsabschnitt (36) und ein Äußeres der Brennstoffzellenkammer (R1) miteinander verbindet, um das Ausstoßverbrennungsgas, das an dem Verbrennungsabschnitt (36) erzeugt wird, in die Außenumgebung abzugeben;
einem ersten Lüfter (41), der an einem Einlassabschnitt (10c) der Belüftungsausstoßleitung (KL) vorgesehen ist, um Luft in die Brennstoffzellenkammer (R1) zu saugen;
einem zweiten Lüfter (42), der an dem Ausstoßabschnitt (10d) der Belüftungsausstoßleitung (KL) vorgesehen ist, um Luft von der Brennstoffzellenkammer (R1) abzugeben; und
einer Steuereinheit (15), die den ersten Lüfter (41) und den zweiten Lüfter (42) steuert, wobei das Brennstoffzellensystem des Weiteren einen Verdampfungsabschnitt (32) aufweist, der Wasserdampf zur Umwandlung durch Verdampfen von Wasser erzeugt,
wobei die Steuereinheit (15) während eines Leistungserzeugungsbetriebs des Brennstoffzellensystems (100) mindestens den zweiten Lüfter (42) antreibt, um das Innere der Brennstoffzellenkammer (R1) auf einem negativen Druck zu halten,
wobei die Steuereinheit (15) den zweiten Lüfter (42) steuert, um angehalten zu sein, und den ersten Lüfter (41) antreibt, um das Innere der Brennstoffzellenkammer (R 1) auf einem positiven Druck zu halten, bis eine Erzeugung von Wasserdampf innerhalb des Gehäuses (31) angehalten wird, nachdem ein Abschaltbetrieb des Brennstoffzellensystems (100) gestartet ist.

2. Brennstoffzellensystem (100) gemäß Anspruch 1, wobei der zweite Lüfter (42) eine Luftausstoßkapazität aufweist, die größer als eine Lufteinlasskapazität des ersten Lüfters (41) ist.

3. Brennstoffzellensystem (100) gemäß Anspruch 1, wobei die Steuereinheit (15) bestimmt, dass die Erzeugung des Wasserdampfs innerhalb des Gehäuses (31) in einem Fall angehalten wird, in dem eine von einer ersten, zweiten und dritten Bedingungen erfasst wird, wobei die erste Bedingung ein Wechsel eines Änderungsmodus von einer Temperatur des Verdampfungsabschnitts (32) von einem Erhöhungsmodus zu einem Abnahmemodus ist, die zweite Bedingung ist, dass die Temperatur des Verdampfungsabschnitts (32) gleich oder kleiner als eine vorbestimmte Temperatur wird, die dritte Bedingung ist, dass eine vorbestimmte Zeit verstreicht nachdem der Leistungserzeugungsbetrieb des Brennstoffzellensystems (100) angehalten wird.

4. Brennstoffzellensystem (100) gemäß einem der Ansprüche 1 bis 3, wobei der erste Lüfter (41) in einem Bereitschaftszustand des Brennstoffzellensystem (100) auf Basis eines Antriebssignal einer Verbrennungsvorrichtung (18) betrieben wird, wobei die Verbrennungsvorrichtung (18) in der Innenumgebung eingebaut ist und mit dem Einlassabschnitt (10c) und dem Auslassabschnitt (10d) der Brennstoffzellenkammer (R1) verbunden ist.

## Revendications

1. Système de pile à combustible (100) comprenant :
une pile à combustible (34) générant une énergie électrique à partir d'un combustible et d'un gaz oxydant ;
une partie de combustion (36) générant un gaz d'échappement de combustion en brûlant un effluent gazeux anodique provenant de la pile à combustible (34) et un effluent gazeux cathodique provenant de la pile à combustible (34) ;
un dispositif d'alimentation en gaz oxydant (11c1) alimentant avec le gaz oxydant la partie de combustion (36) ;
un boîtier (31) abritant la pile à combustible (34) et la partie de combustion (36) ;
une chambre de pile à combustible (R1) installée dans un environnement intérieur et abritant au moins le boîtier (31) et le dispositif d'alimentation en gaz oxydant (11c1), la chambre de pile à combustible (R1) comportant une structure étanche à l'air ;
une conduite de ventilation et d'échappement (KL) comportant une partie d'admission (10c) qui aspire de l'air depuis un environnement extérieur pour envoyer l'air à l'intérieur de la chambre de pile à combustible (R1) et une partie d'échappement (10d) qui évacue l'air à l'intérieur de la chambre de pile à combustible (R1) dans l'environnement extérieur ;
une conduite de combustion et d'échappement (NL) comportant un tuyau d'alimentation en air cathodique (11c) qui relie un intérieur de la chambre de pile à combustible (R1) et la pile à combustible (34) l'un à l'autre pour alimenter avec l'air comportant le gaz oxydant à l'intérieur de la chambre de pile à combustible (R1) la pile à combustible (34) et un tuyau d'échappement (11d) qui relie la partie de combustion (36) et un extérieur de la chambre de pile à combustible (R1) l'un à l'autre pour évacuer le gaz d'échappement de combustion généré dans la partie de combustion (36) dans l'environnement extérieur ;
un premier ventilateur (41) disposé dans la partie d'admission (10c) de la conduite de ventilation et d'échappement (KL) pour aspirer de l'air jusqu'à l'intérieur de la chambre de pile à combustible (R1) ;
un deuxième ventilateur (42) disposé dans la partie d'échappement (10d) de la conduite de ventilation et d'échappement (KL) pour évacuer l'air de la chambre de pile à combustible (R1) ; et
une unité de commande (15) commandant le premier ventilateur (41) et le deuxième ventilateur (42), le système de pile à combustible comprenant en outre une partie d'évaporation (32) qui génère une vapeur d'eau en évaporant de l'eau pour reformage,
dans lequel l'unité de commande (15) active au moins le deuxième ventilateur (42) pendant une opération de production d'énergie du système de pile à combustible (100) pour maintenir l'intérieur de la chambre de pile à combustible (R1) à une pression négative,
dans lequel l'unité de commande (15) commande l'arrêt du deuxième ventilateur (42) et active le premier ventilateur (41) pour maintenir l'intérieur de la chambre de pile à combustible (R1) à une pression positive jusqu'à ce qu'une production de vapeur d'eau à l'intérieur du boîtier (31) soit arrêtée après qu'une opération d'arrêt du système de pile à combustible (100) a été lancée.

2. Système de pile à combustible (100) selon la revendication 1 dans lequel le deuxième ventilateur (42) comporte une capacité d'échappement d'air supérieure à une capacité d'admission d'air du premier ventilateur (41).

3. Système de pile à combustible (100) selon la revendication 1, dans lequel l'unité de commande (15) détermine que la production de la vapeur d'eau à l'intérieur du boîtier (31) est arrêtée dans un cas où l'une quelconque de première, deuxième et troisième conditions est détectée, la première condition où un mode de variation d'une température de la partie d'évaporation (32) est passé d'un mode d'augmentation à un mode de diminution, la deuxième condition où la température de la partie d'évaporation (32) devient égale ou inférieure à une température prédéterminée, la troisième condition où un temps prédéterminé s'écoule après que l'opération de production d'énergie du système de pile à combustible (100) a été arrêtée.

4. Système de pile à combustible (100) selon l'une quelconque des revendications 1 à 3, dans lequel le premier ventilateur (41) est activé sur une base d'un signal d'activation d'un appareil de combustion (18) dans un état d'attente du système de pile à combustible (100), l'appareil de combustion (18) étant installé dans l'environnement intérieur et étant relié à la partie d'admission (10c) et la partie d'échappement (10d) de la chambre de pile à combustible (R1).
